# EUROPEAN PATENT APPLICATION

(11) **EP 3 032 675 A1**
(43) Date of publication of application: **15.06.2016**
(21) Application number: 15199509.9
(22) Date of filing: 11.12.2015
(51) Int. Cl.: H02G 15/064

(54) **POWER CABLE POLYMER JOINT**

(30) Priority: 12.12.2014 JP 2014251553
(71) Applicant: Hitachi Metals, Ltd., Tokyo 1088224 (JP)
(72) Inventor: AISHIMA, Yukinori, Tokyo (JP); MURATA, Wataru, Tokyo (JP)
(74) Representative: Betten & Resch

(57) **Abstract**

A power cable polymer joint includes a polymer protective layer including a cable insertion hole into which a stripped end of a power cable is inserted. The polymer protective layer includes an insulation including a polymer-based material, a semi-conductive portion including mainly a polymer-based material to relax an electric field at the end of the power cable, and a tubular member including a different material from the polymer-based material and extending on a rear-end side of the insulation and the semi-conductive portion. The insulation and the semi-conductive portion and the tubular member are integrally formed.

## Description

The present application is based on Japanese patent application No.2014-251553 filed on December 12, 2014, the entire contents of which are incorporated herein by reference.

### BACKGROUND OF THE INVENTION

### 1. FIELD OF THE INVENTION

The invention relates to a power cable polymer joint using a polymer protective layer.

### 2. DESCRIPTION OF THE RELATED ART

A terminal joint to be directly connected to equipment has been proposed which is constructed such that a penetrating portion leading to an equipment is formed using a hard insulator such as an epoxy bushing to ensure long-term airtightness or oil tightness, and a stress cone and a mechanism to compress the stress cone are provided on the side of a cable so as to relax an electric field (see e.g., JP-A-H07-170643).

The terminal joint to be directly connected to equipment is provided with the epoxy bushing into which an end of the cable is inserted, the stress cone inserted inside the epoxy bushing, a compressor device for compressing the stress cone toward the cable, a protective metal fitting covering a sheath of the cable, and a waterproof tape layer formed between the protective metal fitting and the sheath of the cable by winding a waterproof tape.

### SUMMARY OF THE INVENTION

Since the terminal joint is constructed such that the protective metal fitting is attached to the insulation layer (or sheath), the entire weight increases due to an increase in the number of components so that the connection workload of the terminal joint to the equipment increases.

It is an object of the invention to provide a power cable polymer joint that is lightened as well as having improved easiness of waterproofing.

According to an embodiment of the invention, a power cable polymer joint comprises a polymer protective layer comprising a cable insertion hole into which a stripped end of a power cable is inserted,
wherein the polymer protective layer comprises:
an insulation comprising a polymer-based material;
a semi-conductive portion comprising mainly a polymer-based material to relax an electric field at the end of the power cable; and
a tubular member comprising a different material from the polymer-based material and extending on a rear-end side of the insulation and the semi-conductive portion, and
wherein the insulation and the semi-conductive portion and the tubular member are integrally formed.

In the above embodiment, the end of the power cable may be directly connected to equipment.

### Effects of the invention

According to an embodiment of the invention, a power cable polymer joint can be provided that is lightened as well as having improved easiness of waterproofing.

### BRIEF DESCRIPTION OF THE DRAWINGS

Next, the present invention will be explained in more detail in conjunction with appended drawings, wherein:
**FIG.1** is a longitudinal cross-sectional view showing a configuration example of a power cable polymer terminal joint in an embodiment of the present invention; and
**FIG.2** is a lateral cross-sectional view showing a power cable shown in **FIG.1**.

### DETAILED DESCRIPTION OF THE PREFERRED EMBODIMENTS

An embodiment of the invention will be described below in reference to the drawings. Constituent elements having substantially the same functions are denoted by the same reference numerals in each drawing and the overlapping explanation thereof will be omitted.

### [Embodiment]

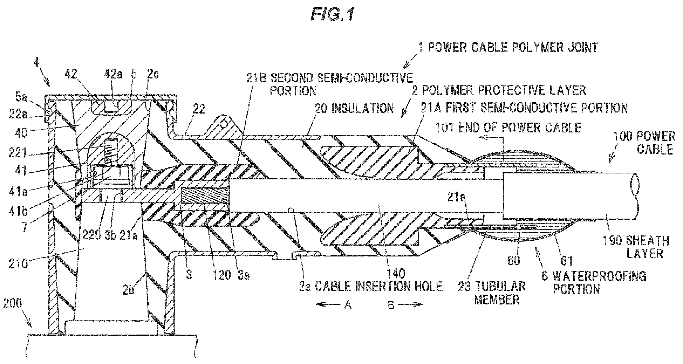

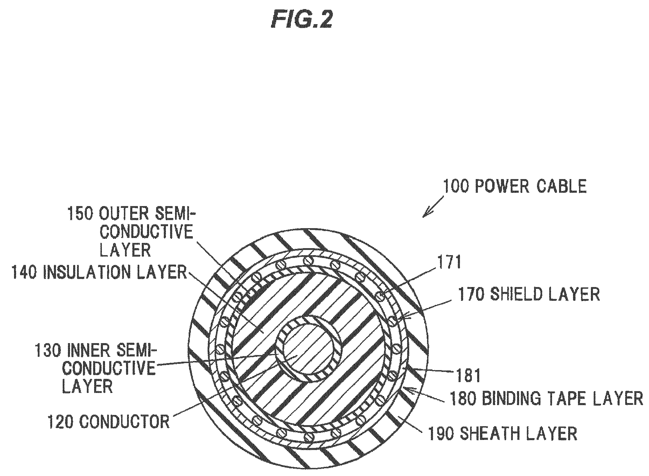

**FIG.1** is a longitudinal cross-sectional view showing a configuration example of a power cable polymer joint in the embodiment of the invention which is connected to an equipment. **FIG.2** is a lateral cross-sectional view showing a power cable shown in

### FIG.1

### Configuration of power cable polymer joint

A power cable polymer joint 1 is a terminal joint to be directly connected to equipment, is formed mainly of a polymer-based material (an insulating polymer material), and is provided with a polymer protective layer **2** having a cable insertion hole **2a** for insertion of a stripped end **101** of a power cable **100,** a compression terminal **3** connected to a conductor **120** of the power cable **100,** an insulating plug **4** connecting the compression terminal **3** to an equipment-side conductor **220** of an equipment **200,** a protective cap **5** for protecting the insulating plug **4,** and a waterproofing portion **6** for sealing a rear-end side B of the polymer protective layer **2.**

### Configuration of equipment

The power cable polymer joint 1 is applicable to, e.g., the equipment **200** such as transformer or gas-insulated switchgear. The equipment **200** is provided with an equipment-side bushing **210** having a tapered shape and the equipment-side conductor **220** exposed from the equipment-side bushing **210.** A male screw **221** is formed at a tip of the equipment-side conductor **220.**

### Configuration of polymer protective layer

The polymer protective layer **2** is provided with an insulation **20** formed of a polymer-based material, a first semi-conductive portion **21**A for relaxing an electric field at the end **101** of the power cable **100,** a second semi-conductive portion **21**B for relaxing an electric field at the compression terminal **3,** a protective cover **22** for protecting a front-end side A of the insulation **20,** and a tubular member **23** provided on the rear-end side B of the insulation **20**. The insulation **20,** the first and second semi-conductive portions **21**A and **21**B, the protective cover **22** and the tubular member **23,** which constitute the polymer protective layer **2,** are integrally formed using a mold in a factory.

The polymer protective layer **2** also has a bushing insertion hole **2b** for insertion of the equipment-side bushing **210** and an insulating plug insertion hole **2c** for insertion of the insulating plug **4.**

The polymer-based material for forming the insulation **20** is, e.g., a silicone rubber, an ethylene-propylene rubber (EPM) or an ethylene-propylene-diene rubber (EPDM), etc.

The first and second semi-conductive portions **21A** and **21B** are formed mainly of a polymer-based material. In detail, the first and second semi-conductive portions **21A** and **21B** are formed by extruding a polymer-based material which is obtained by, e.g., dispersing conductive powder such as carbon in a silicone rubber, EMP or EPDM, etc., and thus has conductivity.

A hole **21**a having an inner diameter larger than an outer diameter of an insulation layer **140** is formed in the first semi-conductive portion **21A** in a region overlapping with the tubular member **23** in the cable axis direction. If the hole **21a** is not formed, it is difficult to insert the power cable **100** into the cable insertion hole **2**a since the tubular member **23** formed of a metal restricts expansion of the inner diameter of the first semi-conductive portion **21A.** In the present embodiment, since the hole **21**a is formed, it is easy to insert the power cable **100** into the cable insertion hole **2a.**

The protective cover **22** is formed of, e.g., a metal such as brass or aluminum alloy. A recess **22a** to be engaged with a protrusion **5a** (described later) of the protective cap **5** is formed on an outer peripheral surface of the protective cover **22.** Thus, when pushing down the protective cap **5** toward the equipment **200,** the protrusion **5a** of the protective cap **5** is engaged with the recess **22a** of the protective cover **22** and the protective cap **5** is thereby fixed to the protective cover **22.**

The tubular member **23** is formed of a different material from the polymer-based material, in other words, formed of a material having good adhesion to a waterproof tape **60** used to form the waterproofing portion **6,** e.g., a metal such as brass or aluminum alloy. When the metal tubular member **23** is not provided and the insulation **20** is formed of, e.g., a silicone rubber, it is difficult to waterproof between the insulation **20** and a sheath layer **190** of the power cable **100** by the waterproof tape **60** since adhesion between the waterproof tape **60** and the silicone rubber insulation **20** is poor. Therefore, the metal tubular member **23** is employed in the present embodiment. In addition, the tubular member **23** has an inner diameter larger than an outer diameter of the non-stripped power cable **100,** i.e., an outer diameter of the sheath layer **190.**

The tubular member **23** is provided on the outermost side of the first semi-conductive portion **21A** in the present embodiment, but may be provided inside or the innermost side of the first semi-conductive portion **21A.** In addition, an end portion of the tubular member **23** on the front-end side A is exemplarily chamfered to relax electric field concentration. Plating may be additionally provided on the tubular member **23** to suppress discoloration due to heat during molding of the polymer protective layer **2.**

### Other configuration

The compression terminal **3** has a crimp hole **3a** on the rear-end side B and an equipment connection hole **3b** on the front-end side A. After inserting the conductor **120** of the power cable **100** into the crimp hole **3a** of the compression terminal **3,** the diameter of the crimp hole **3a** is reduced by crimping the compression terminal **3** on the rear-end side B and the conductor **120** of the power cable **100** is thereby connected to the compression terminal **3.**

The insulating plug **4** is provided with an insulation **40,** a high-voltage electrode **41** provided on one end of the insulation **40,** and a voltage detection electrode **42** provided on the other end of the insulation **40.** The high-voltage electrode **41** has a counterbore hole **41a** corresponding to a shape of a nut 7 and a female screw **41b** screwed together with the male screw **221** of the equipment-side conductor **220.** The voltage detection electrode **42** has a square hole **42a** to which a driver head of a socket wrench is fitted. The insulation **40,** the high-voltage electrode **41** and the voltage detection electrode **42,** which constitute the insulating plug **4,** are integrally formed using a mold in a factory.

The protective cap 5 is formed of, e.g., a metal such as brass or aluminum alloy. The protrusion 5a to be engaged with the recess **22a** of the protective cover **22** is formed on an inner peripheral surface of the protective cap **5.**

The waterproofing portion **6** is formed by winding a good water-resistant member, e.g., the waterproof tape **60** such as polyethylene or epoxy tape with an adhesive layer and then providing a heat shrinkable tube **61** thereon. Alternatively, the waterproofing portion **6** may be formed using another method other than using the waterproof tape **60.**

### (Configuration of power cable)

The power cable **100** is composed of the conductor **120** formed of a twisted wire, an inner semi-conductive layer **130** formed around the conductor **120,** the insulation layer **140** formed around the inner semi-conductive layer **130,** an outer semi-conductive layer **150** formed around the insulation layer **140,** a shield layer **170** formed by winding wires **171** around the outer semi-conductive layer **150,** a binding tape layer **180** formed by winding a binding tape **181** around the shield layer **170,** and the sheath layer **190** formed around the binding tape layer **180.**

The conductor **120** is formed by twisting plural strands together. As the strand, it is possible to use a wire rod, e.g., a tin-plated soft copper wire, etc. The conductor **120** transmits electricity with a high voltage of, e.g., not less than **7000V.**

The inner semi-conductive layer **130** and the outer semi-conductive layer **150** are provided to relax electric field concentration, are formed mainly of a polymer-based material, and are formed by extruding a material which is obtained by, e.g., dispersing conductive powder such as carbon in a rubber such as ethylene-propylene rubber, ethylene-vinyl acetate copolymer (EVA) resin or butyl rubber and thus has conductivity.

The insulation layer **140** is formed by extruding a material such as ethylene-propylene rubber, vinyl chloride, cross-linked polyethylene, silicone rubber or fluorine-based material, etc.

The shield layer **170** is formed by spirally winding the wires **171** around the outer semi-conductive layer **150** along the axial direction of the cable. The shield layer **170** is connected to a ground when in use.

The binding tape layer **180** is formed by spirally winding the binding tape **181,** with an overlap, around the shield layer **170** along the axial direction of the cable. The binding tape **181** used can be, e.g., a plastic or rayon tape having a thickness of **0.03** to **0.5** mm and a width of **50** to **90** mm

The sheath layer **190** is formed by extruding a material formed by adding a cross-linking agent, etc., to a rubber such as natural rubber, butyl rubber, halogenated butyl rubber, ethylene-propylene rubber, chloroprene rubber, styrene-butadiene rubber, nitrile rubber, chlorosulfonated polyethylene, chlorinated polyethylene, epichlorohydrin rubber, acrylic rubber, silicone rubber, fluoro-rubber, urethane rubber or halogen-free polyolefin elastomer.

### Connection method

Next, a method of connecting the power cable **100** to the power cable polymer joint 1 and a method of connecting the power cable polymer joint 1 to the equipment **200** will be described.

Firstly, an end of the power cable **100** is stripped. Next, the compression terminal **3** is connected to the conductor **120** of the power cable **100**. Then, the end **101** of the power cable **100** is inserted into the cable insertion hole **2a** of the polymer protective layer **2** of the power cable polymer joint **1.**

Next, waterproofing process is carried out to seal between the tubular member **23** and the sheath layer **190** of the power cable **100.** That is, the waterproof tape **60** is wound around the tubular member **23** at a portion of the outer peripheral surface exposed from the insulation **20** and also around the sheath layer **190** of the power cable **100.** At this time, the waterproof tape **60** may be wound around between the inner peripheral surface of the tubular member **23** and the sheath layer **190,** as shown in **FIG.1****.** This allows the power cable **100** to less wobble. Next, the waterproof tape **60** and the periphery thereof are covered with the heat shrinkable tube **61.** The waterproofing portion **6** is thereby formed.

After connecting the power cable **100** to the power cable polymer joint **1,** the equipment-side conductor **220** of the equipment **200** is inserted into the equipment connection hole **3b** of the compression terminal **3** of the power cable polymer joint **1.** Next, the nut **7** is tightened onto the male screw **221** of the equipment-side conductor **220** to fix the compression terminal **3** to the equipment-side bushing **210.** Next, a drive head of a socket wrench is fitted to the square hole **42a** of the insulating plug **4,** and the high-voltage electrode **41** of the insulating plug **4** is tightened onto the male screw **221** of the equipment-side conductor **220** by turning the socket wrench. Next, the protective cap **5** is attached to the protective cover **22** by engaging the protrusion **5a** of the protective cap **5** with the recess **22a** of the protective cover **22.** The power cable polymer joint **1** is thereby connected to the equipment **200.**

### (Functions and effects of the embodiment)

In the present embodiment, the following functions and effects are obtained.
**(1)** Since the tubular member **23** is integrally formed as a part of the polymer protective layer **2,** a component for attaching the tubular member **23** is not required and the weight is thus reduced.
**(2)** Since the tubular member **23** is formed of a material having good adhesion to the waterproof tape **60,** waterproofing is easily maintained by winding the waterproof tape **60** around the tubular member **23** and the power cable **100.**
**(3)** Since the tubular member **23** has the inner diameter larger than the outer diameter of the non-stripped power cable **100,** i.e., the outer diameter of the sheath layer **190** and also the first semi-conductive portion **21A** has the hole **21a** having the inner diameter larger than the outer diameter of the insulation layer **140** in a region overlapping with the tubular member **23** in the cable axis direction, insertability of the power cable **100** into the cable insertion hole **2a** is good.

The present invention is not intended to be limited to the embodiment, and the various kinds of embodiments can be implemented. For example, although the joint to be directly connected to equipment has been described in the embodiment, the invention is also applicable to a cable terminal joint and a cable intermediate joint.

In addition, some of the constituent elements in the embodiment can be omitted or changed without changing the gist of the invention. For example, the heat shrinkable tube **61** of the waterproof tape **60** may be omitted.

## Claims

1. A power cable polymer joint, comprising a polymer protective layer comprising a cable insertion hole into which a stripped end of a power cable is inserted,
wherein the polymer protective layer comprises:
an insulation comprising a polymer-based material;
a semi-conductive portion comprising mainly a polymer-based material to relax an electric field at the end of the power cable; and
a tubular member comprising a different material from the polymer-based material and extending on a rear-end side of the insulation and the semi-conductive portion, and
wherein the insulation and the semi-conductive portion and the tubular member are integrally formed.

2. The power cable polymer joint according to claim 1, wherein the end of the power cable is directly connected to equipment.
